# EUROPÄISCHE PATENTSCHRIFT

(11) **EP 1 631 865 B1**
(45) Veröffentlichungstag und Bekanntmachung des Hinweises auf die Patenterteilung: **07.05.2008**
(21) Anmeldenummer: 04739728.6
(22) Anmeldetag: 09.06.2004
(51) Int. Cl.: G05B 19/042

(54) **VERFAHREN ZUM ÜBERWACHEN EINES FELDGERÄTES**
METHOD FOR MONITORING A FIELD DEVICE
PROCEDE POUR SURVEILLER UN DISPOSITIF A EFFET DE CHAMP

(30) Priorität: 11.06.2003 DE 10326665
(43) Veröffentlichungstag der Anmeldung: 08.03.2006
(73) Patentinhaber: Endress + Hauser Process Solutions AG, 4153 Reinach BL (CH)
(72) Erfinder: DE GROOT, Vincent, 68300 St. Louis (FR); ZUMOBERHAUS, Philipp, CH-4106 Therwil (CH)
(74) Vertreter: Andres, Angelika Maria
(86) Internationale Anmeldenummer: PCT/EP2004/006216
(87) Internationale Veröffentlichungsnummer: WO 2004/109411

(56) Entgegenhaltungen:
- WO-A-01/31407
- WO-A-01/90829
- DE-A1- 19 855 209

## Beschreibung

Die Erfindung betrifft ein Verfahren zum Überwachen eines Feldgerätes gemäß dem Oberbegriff des Anspruchs 1.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte, pH-Redoxpotential-Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Neben solchen Messgeräten sind auch Systeme bekannt, die neben der Messwerterfassung auch weitere Aufgaben erfüllen; zu nennen sind hier Elektrodenreinigungssysteme, Kalibriersysteme sowie Probenehmer.

Ebenfalls als Feldgeräte werden Ein-/Ausgabeeinheiten sogenannte Remote I/Os bezeichnet.

Zur Beeinflussung von Prozessvariablen dienen sogenannte Aktoren z. B. Ventile, die den Durchfluss einer Flüssigkeit in einem Rohrleitungsabschnitt Steuern oder Pumpen, die den Füllstand in einem Behälter beeinflussen.

Eine Vielzahl solcher Feldgeräte wird von der Firma Endress + Hauser® hergestellt und vertrieben.

Häufig sind Feldgeräte in einer modernen Fabrikationsanlage über ein Feldbussystem (Profibus®, Foundation®-Fieldbus, HART®, etc.) mit übergeordneten Einheiten z. B. Leitsystemen bzw. Steuereinheiten verbunden. Diese übergeordneten Einheiten dienen zur Prozesssteuerung, Prozessvisualisierung, Prozessüberwachung sowie zur Bedienung und Überwachung der Feldgeräte.

Von den übergeordneten Einheiten sind auch Kommunikationsverbindungen zu weiteren Firmennetzwerken möglich.

Zur Bedienung der Feldgeräte sind entsprechende Bedienprogramme (Bedientools) im Leitsystem bzw. in der Steuereinheit notwendig. Diese Bedienprogramme können eigenständig ablaufen oder aber auch in Leitsystem-Anwendungen integriert sein.

Die Sensoren liefern Messwerte, die den aktuellen Werten der erfassten Prozessvariablen entsprechen. Diese Messwerte werden an eine Steuereinheit z. B. SPS (Speicherprogrammierbare Steuerung) weitergeleitet.

In der Regel erfolgt die Prozesssteuerung von der Steuereinheit, wo die Messwerte verschiedener Feldgeräte ausgewertet werden und aufgrund der Auswertung Steuersignale für die entsprechenden Aktoren erzeugt werden. Neben der reinen Messwertübertragung können Feldgeräte auch zusätzliche Informationen (Diagnose, Status, etc.) übertragen. Die Parametrierung und Konfigurierung der Feldgeräte erfolgt ebenfalls über das Feldbussystem.

Das Feldbussystem bezeichnet man auch als Prozesskontrollsystem.

Die Sicherheitsanforderungen an Prozesskontrollsysteme werden immer strenger. Deshalb sind in vielen Unternehmen Prozesskontrollsysteme von anderen Firmennetzwerken (SAP, Business) streng getrennt. Dadurch sollen unerlaubte Zugriffe auf Feldgeräte vermeiden werden. Momentan konzentrieren sich die Anstrengungen im Hinblick auf Sicherheit bei Prozesskontrollsystemen auf die Netzwerk-Ebene.

Zur Vermeidung von firmenfremden Eingriffen werden sogenannte Firewalls eingesetzt. Neben firmenfremden Eingriffen sind aber unberechtigte firmeninterne Eingriffe ebenso gefährlich. Bei firmeninternen Eingriffen können z. B. Parameter in Feldgeräten geändert werden oder die gesamte Kontrollstrategie geändert werden. Dies kann zu unerwünschten Änderungen im Produktionsablauf führen.

Eine Kontrollstrategie kann z. B. mit dem System FieldCare® von der Firma Endress + Hauser erzeugt werden und in die Feldgeräte geladen werden.

Programme, die die Parametrierung, Konfigurierung und eine Veränderung der Kontrollstrategie ermöglichen (SCADA-Systeme oder Configuration Tools) sind meist mit einem Passwortschutz ausgestattet. Hierbei ist auch eine Authorisierung der Personen die Änderungen durchführen notwendig.

Z. B. können bei dem Centum CS 1000 Prozesskontrollsystem von Yokogawa kritische Funktionsblöcke, die z.B. in Feldgeräten ablaufen, nur über die Eingabe von zwei Passwörtern verschiedener Personen geändert werden.

Bei der Firma Endress + Hauser gibt es ein Sicherheitsschutz gegen unberechtigtes Andern von Parametern bei Feldgeräten über eine Verriegelung. Die Person, die Änderung vornehmen möchte, muss am Feldgerät einen Code eingeben bevor Änderungen am Feldgerät möglich werden.

Feldgeräte, die in Prozesskontrollsystemen eingesetzt werden, weisen normalerweise Mikroprozessoren mit entsprechenden Peripherie Bausteinen auf.

Deshalb kann aber nicht ausgeschlossen werden, dass Hardware bzw. Software oder auch deren Teile in einem Feldgerät unberechtigt ausgetauscht bzw. verändert werden. Ein derartiger Manipulation würde von einem Prozessleitsystem aus nicht erkannt werden. Sie bedeuten aber ein erheblichen Eingriff in den Prozessablauf bzw. die Kontrollstrategie.

Insbesondere auch aus gesetzlichen bzw. vorschriftsmäßigen Gründen ist es für einen Anlagebetreiber wichtig, dass ein manipulationssicheren Prozessablauf gewährleistet wird.

WO 01/31407 A zeigt ein Verfahren zum Verhindern von unberechtigtem Zugriff auf Module von Automatisierungssystemen. Die Feldgeräte senden eine Kennung an die Steuereinheit die mit einer im Steuereinheit gespeicherten Vergleichskennung verglichen wird und bei Nichtübereinstimmung, einen Betrieb des Feldgerät am System verweigert wird. Hier wird nicht eine Änderung der Kennung geprüft, sondern die Eigenschaften der angeforderte Kennung. Wenn diese Eigenschaften nicht die erforderlichen Spezifikationen enthalten, wird ein unberechtigte Manipulation des Feldgeräts festgestellt.

Aufgabe der Erfindung ist es deshalb, ein Verfahren zum Überwachen von Feldgeräten anzugeben, das ein unberechtigtes Manipulieren von Feldgeräten nicht ermöglicht.

Gelöst wird diese Aufgabe durch die in Anspruch 1 angegebenen Merkmale. Vorteilhafte Weiterentwicklungen der Erfindung sind in den Unteransprüchen angegeben.

Wesentliche Idee der Erfindung ist es, dass eine Steuereinheit, die über ein Feldbus mit dem Feldgerät verbunden ist, in zeitlichen Abständen eine individuelle Kennung des Feldgerätes anfordert und diese mit einer in der Steuereinheit abgespeicherten Kennung vergleicht. Durch diese Abfrage wird ein Austausch der Hardware bzw. der Software oder deren Teile sofort bemerkt. Insbesondere im Hinblick auf die Validierbarkeit einer Anlage ist das erfindungsgemäße Verfahren wesentlich.

In einfacher Weise kann es sich bei der individuellen Kennung um die Seriennummer des Feldgerätes handeln.

In einer alternativen Ausgestaltung der Erfindung kann es sich bei der individuellen Kennung um ein Schlüssel in der Gerätefirmenware des Feldgerätes handeln.

Denkbar ist auch als individuelle Kennung eine im Feldgeräte abgespeicherte Prüfsumme einer Speichereinheit zu verwenden.

Um eine zuverlässige Protokollierung der Anlage zu ermöglichen, wird bei jeder Anfrage die angeforderte Kennung in einer Datenbank mit einem entsprechenden Zeitstempel abgespeichert.

Sinnvoll ist ein Abspeichern der Kennung in der Datenbank nur dann, wenn eine Änderung der Kennung festgestellt wurde.

Da eine Manipulation an einem Feldgerät dem Bedienpersonal unmittelbar mitgeteilt werden muss, wird, falls eine Änderung der Kennung eines Feldgerätes festgestellt wurde, eine Alarmmeldung oder eine Wamungsmeldung erzeugt.

Da auch betriebsbedingte Änderungen am Feldgerät vorgenommen werden müssen, sollen Alarmmeldungen oder Ereignisse nur erzeugt werden, wenn diese außerhalb spezifizierter Wartungszeiträume liegen. Oder wenn die Wartung explizit erlaubt/ geplant wurde.

Nachfolgend ist die Erfindung anhand eines in der Zeichnung dargestellten Ausführungsbeispiels näher erläutert.

Es zeigen:

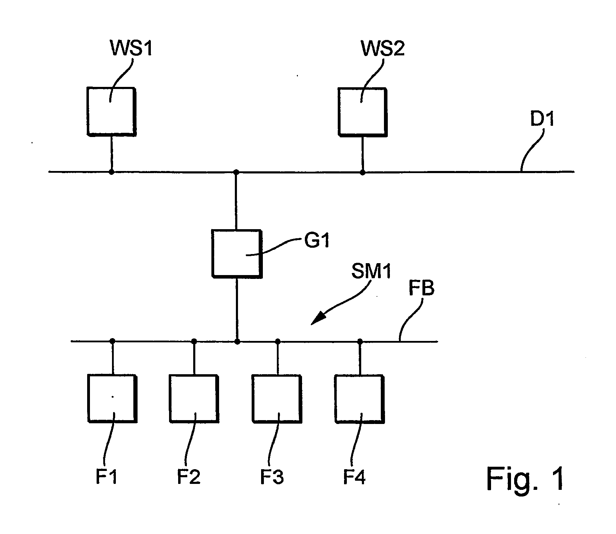

Fig. 1 Netzwerk der Prozessautomatisierungstechnik in schematischer Darstellung.

In Fig. 1 ist ein Netzwerk der Prozessautomatisierungstechnik näher dargestellt. An einem Datenbus D1 sind mehrere Leitsysteme bzw. Steuereinheiten (Workstations WS1, WS2) die zur Prozessvisualisierung, Prozessüberwachung und zum Engeenering dienen, angeschlossen. Der Datenbus D1 arbeitet z. B. nach dem HSE (High Speed Ethernet) Standard der Foundation Fieldbus. Über ein Gateway G1, das auch als Linking Device bezeichnet wird, ist der Datenbus D1 mit einem Feldbussegment SM1 verbunden. Das Feldbussegment SM1 besteht aus mehreren Feldgeräten F1, F2, F3, F4, die über einen Feldbus FB miteinander verbunden sind. Der Feldbus arbeitet z. B. nach dem Foundation® Fieldbus- Standard.

Nachfolgend ist das erfindungsgemäße Verfahren näher erläutert.

Die Steuereinheit WS1 fordert in zeitlichen Abständen eine individuelle Kennung des Feldgerätes z. B. F1 an. Aufgrund der Anfrage sendet das Feldgerät F1 seine individuelle Kennung an die Steuereinheit WS1. In der Steuereinheit WS1 wird diese individuelle Kennung mit einer in der Steuereinheit WS1 abgespeicherten individuellen Kennung verglichen. Stimmt die vom Feldgerät übertragene Kennung mit der in der Steuereinheit abgespeicherten individuellen Kennung überein, so ist sichergestellt, dass keine unberechtigten Manipulationen hinsichtlich Hard- bzw. Software am Feldgerät vorgenommen worden sind. Dadurch ist eine Validierung des Prozessablaufes möglich.

Als individuelle Kennung ist die Seriennummer des Feldgerätes F1 bzw. eine Schlüssel in der Gerätesoftware möglich. Die Steuereinheit WS1 ist mit einer externen Datenbank verbunden, in der jede Abfrage mit einem Zeitstempel protokolliert wird. Dadurch ist ein Nachweis über einen längeren Zeitraum möglich.

In einer alternativen Ausgestaltung der Erfindung erfolgt das Abspeichern der Datenbank nur, wenn eine Änderung der Kennung von der Steuereinheit WS1 festegestellt wurde.

In der Regel finden Wartungsarbeiten an einer Automatisierungsanlage zu genau spezifizierten Wartungszeiträumen statt. Um unnötige Alarmmeldungen zu vermeiden, werden diese nur erzeugt, wenn sie außerhalb spezifizierter Wartungszeiträume liegen.

Die Alarmmeldung kann an der Steuereinheit WS1 angezeigt werden oder aber auch über alternative Wege z. B. eMail, SMS und Fax an die zuständigen Stellen weitergeleitet werden.

In einer sehr einfachen Ausgestaltung wird in der Steuereinheit nur überwacht, ob das betreffende Feldgerät z.B. F1 mit dem Feldbus FB verbunden ist und funktionsfähig ist.

Hierfür richtet die Steuereinheit WS1 eine Anfrage an das Feldgerät F1, die eine Antwort des Feldgerätes F1 erfordert. Falls das Feldgerät nicht antwortet, wird der Ausfall in der Datenbank abgespeichert.

## Patentansprüche

1. Verfahren zum Überwachen eines Feldgerätes das über einen Datenbus (D1) mit einer Steuereinheit verbunden ist, wobei die Steuereinheit in zeitlichen Abständen eine individuelle Kennung des Feldgerätes anfordert und diese mit einer in der Steuereinheit (WS1, WS2) abgespeicherten Kennung vergleicht, um unberechtigte Manipulationen an dem Feldgerät (F1, F4) festzustellen, **dadurch gekennzeichnet, dass** bei einer Änderung der Kennung eine Alarmmeldung oder eine Warnmeldung erzeugt wird.

2. Verfahren nach dem vorhergehenden Anspruch, **dadurch gekennzeichnet, dass** eine Alarmmeldung oder eine Warnmeldung nur erzeugt wird, wenn sie außerhalb spezifizierter Wartungszeiträume liegt.

3. Verfahren nach einem der vorhergehenden Ansprüche, **dadurch gekennzeichnet, dass** die Alarmmeldung oder die Warnmeldung an der Steuereinheit dargestellt wird.

4. Verfahren nach einem der vorhergehende Ansprüche, **dadurch gekennzeichnet, dass** die Alarmmeldung oder die Warnmeldung (*z.B., eMail, SMS, Fax)* in elektronischer Form versendet wird.

5. Verfahren nach einem der vorhergehenden Ansprüche, **dadurch gekennzeichnet, dass** die Alarmmeldungen oder Wammeldungen an der Steuereinheit abrufbar sind.

6. Verfahren nach einem der vorhergehende Ansprüche, **dadurch gekennzeichnet, dass** die Alarmmeldungen oder Wammeldungen über einen Client (*z.B. Internet Explorer*) abgerufen werden können.

7. Verfahren zum Überwachen eines Feldgerätes das über einen Datenbus (D1) mit einer Steuereinheit verbunden ist, wobei die Steuereinheit in zeitlichen Abständen eine individuelle Kennung des Feldgerätes anfordert und diese mit einer in der Steuereinheit (WS1, WS2) abgespeicherten Kennung vergleicht, um unberechtigte Manipulationen an dem Feldgerät (F1, F4) festzustellen, **dadurch gekennzeichnet, dass** die angeforderte Kennung in eine Datenbank mit Zeitstempel abgespeichert wird.

8. Verfahren nach Anspruch 7, **dadurch gekennzeichnet, dass** eine Abspeicherung in der Datenbank nur erfolgt, wenn eine Änderung der Kennung festgestellt wurde.

9. Verfahren nach einem der vorhergehenden Ansprüche 1-8, **dadurch gekennzeichnet, dass** die individuelle Kennung die Serien-Nr. des Feldgerätes ist.

10. Verfahren nach einem der vorhergehenden Ansprüche 1-8, **dadurch gekennzeichnet, dass** die individuelle Kennung ein Schlüssel in der Geräte-Firmware des Feldgerätes ist.

11. Verfahren nach Anspruch 10, **dadurch gekennzeichnet, dass** die Kennung eine Prüfsumme einer Speichereinheit im Feldgerät ist.

## Claims

1. Process for monitoring a field device that is connected to a control unit via a data bus (D1) whereby the control unit requests an individual ID of the field device at regular intervals and compares this ID to an ID stored in the control unit (WS1, WS2) to identify unauthorized tampering at the field device (F1 to F4), **characterized in that** a change in the ID triggers an alarm or a warning message.

2. Process as per the previous Claim, **characterized in that** an alarm or a warning message is only generated if it is outside specified servicing times.

3. Process as per one of the previous Claims, **characterized in that** the alarm or the warning message is indicated at the control unit.

4. Process as per one of the previous Claims, **characterized in that** the alarm or the warning message (e.g. e-mail, text message, fax) is sent in electronic form.

5. Process as per one of the previous Claims, **characterized in that** the alarms or warning messages can be called up at the control unit.

6. Process as per one of the previous Claims, **characterized in that** the alarms or warning messages can be called up via a client (*e.g. Internet Explorer*).

7. Process for monitoring a field device that is connected to a control unit via a data bus (D1) whereby the control unit requests an individual ID of the field device at regular intervals and compares this ID to an ID stored in the control unit (WS1, WS2) to identify unauthorized tampering at the field device (F1 to F4), **characterized in that** the requested ID is saved to a database with a timestamp.

8. Process as per Claim 7, **characterized in that** information is only saved to the database if a change in the ID has been detected.

9. Process as per one of the previous Claims 1-8, **characterized in that** the individual ID is the serial number of the field device.

10. Process as per one of the previous Claims 1-8, **characterized in that** the individual ID is a code in the device firmware of the field device.

11. Process as per Claim 10, **characterized in that** the ID is a checksum of a control unit in the field device.

## Revendications

1. Procédé destiné à la surveillance d'un appareil de terrain, lequel appareil est relié par l'intermédiaire d'un bus de données (D1) à une unité de commande, cette dernière demandant à intervalles de temps déterminés un code d'identification individuel de l'appareil de terrain et le comparant à un code d'identification (WS1, WS2) mémorisé dans l'unité de commande, afin de détecter des manipulations non autorisées sur le bus de terrain (F1 ... F4), **caractérisé en ce qu'**un message d'alarme ou un message d'avertissement est généré en cas de changement du code d'identification.

2. Procédé selon l'une des revendications précédentes, **caractérisé en ce qu'**un message d'alarme ou un message d'avertissement n'est généré qu'en dehors d'intervalles de temps de maintenance spécifiés.

3. Procédé selon l'une des revendications précédentes, **caractérisé en ce que** le message d'alarme ou le message d'avertissement est affiché sur l'unité de commande.

4. Procédé selon l'une des revendications précédentes, **caractérisé en ce que** le message d'alarme ou le message d'avertissement est envoyé sous forme électronique (p. ex. e-mail, SMS, télécopie).

5. Procédé selon l'une des revendications précédentes, **caractérisé en ce que** les messages d'alarme ou les messages d'avertissement peuvent être consultés sur l'unité de commande.

6. Procédé selon l'une des revendications précédentes, **caractérisé en ce que** les messages d'alarme ou les messages d'avertissement peuvent être appelés par l'intermédiaire d'un client (p. ex. Internet Explorer).

7. Procédé destiné à la surveillance d'un appareil de terrain, lequel appareil est relié par l'intermédiaire d'un bus de données (D1) à une unité de commande, cette dernière demandant à intervalles de temps déterminés un code d'identification individuel de l'appareil de terrain et le comparant à un code d'identification (WS1, WS2) mémorisé dans l'unité de commande, afin de détecter des manipulations non autorisées sur le bus de terrain (F1 ... F4), **caractérisé en ce que** le code d'identification demandé est mémorisé avec horodatage.

8. Procédé selon la revendication 7, **caractérisé en ce qu'**une mémorisation dans la base de données n'est effectuée que si un changement du code d'identification a été constaté.

9. Procédé selon l'une des revendications précédentes 1 à 8, **caractérisé en ce que** le code d'identification individuel est le numéro de série de l'appareil de terrain.

10. Procédé selon l'une des revendications précédentes 1 à 8, **caractérisé en ce que** le code d'identification individuel est une clé dans le firmware de l'appareil de terrain.

11. Procédé selon la revendication 10, **caractérisé en ce que** le code d'identification est un total de contrôle d'une unité de mémoire dans l'appareil de terrain.
